# EUROPEAN PATENT APPLICATION

(11) **EP 4 339 799 A1**
(43) Date of publication of application: **20.03.2024**
(21) Application number: 23158760.1
(22) Date of filing: 27.02.2023
(51) Int. Cl.: G06F 16/2452, G06F 16/332, G06F 16/35

(54) **INTELLIGENT SESSION METHOD AND SERVER BASED ON TABLE DATA RETRIEVAL**

(30) Priority: 16.09.2022 CN 202211130339
(71) Applicant: Chongqing Changan Automobile Co., Ltd., Chongqing 400023 (CN)
(72) Inventor: TIAN, Zunming, Chongqing, 400023 (CN); CHEN, Hao, Chongqing, 400023 (CN); YANG, Ji, Chongqing, 400023 (CN)
(74) Representative: Schulz Junghans Patentanwälte PartGmbB

(57) **Abstract**

Disclosed are an intelligent session method and server based on table data retrieval. The method includes: invoking an entity extraction and parsing method based on an input corpus to obtain an entity extraction and parsing result, performing feature splicing and feature coding according to table entity word information, and invoking a query language conversion model based on coded features to generate an SQL statement; and submitting to a database execution engine based on the SQL statement to obtain an execution result, and returning the execution result through an interface as a reply of the input corpus. Thus, the problems of poor accuracy of algorithms and low reasoning efficiency caused by high complexity of coding layers in the related art are solved.

## Description

### Field of the Invention

The present application relates to the technical field of natural language processing, and in particular to an intelligent session method and server based on table data retrieval.

### Background of the Invention

In an intelligent session system, table data retrieval refers to giving answers to natural language (NL) questions based on a natural language technology according to the content of data tables. An ideal solution is provided without involving complex system construction.

At present, on the basis of the corpus of text-based knowledge and a small amount of table-based data, it has been widely used in intelligent assistant services of more automobile brands. However, there is a lack of a session technology based on table data retrieval in query and answer scenarios of massive real-time Internet of vehicles data and other types, and no effective embodiments have been provided yet. However, an intelligent session technology based on text-based knowledge and a small amount of table-based data is difficult to adapt to multi-field and multi-value scenarios of complex tables, is difficult to adapt to diversified user questions, and cannot achieve accurate correspondence. Also, the training stage requires high memory and computing power, which needs to be solved.

### Summary of the Invention

The present application provides an intelligent session method and server based on table data retrieval, which solve the problems of poor accuracy of algorithms and low reasoning efficiency caused by high complexity of coding layers in the related art are solved.

Embodiments in a first aspect of the present application provide an intelligent session method based on table data retrieval, including the following steps: receiving an input corpus, and invoking a syntax error correction method to obtain an error-corrected input corpus; querying a preset high-frequency question SQL library based on the error-corrected input corpus, returning a found SQL result if hitting, invoking an intention classification method based on the error-corrected input corpus and returning an unanswerable state if missing, and invoking an entity extraction and parsing method based on the input corpus if hitting a retrieval intention to obtain an entity extraction and parsing result; searching, based on an entity extraction result, a table entity word library for a table entity query result, invoking a table recall method based on the table entity query result to obtain a target table, and screening corresponding table entity word information; performing feature splicing and feature coding based on the entity extraction and parsing result of the input corpus and the table entity word information, and invoking a query language conversion model based on coded features to generate an SQL statement; and submitting to a database execution engine based on the SQL statement to obtain an execution result, and returning the execution result through an interface as a reply of the input corpus.

According to the above technical means, to ensure that an SQL statement accurately corresponds to a natural language, in the embodiments of the present application, the input corpus, the parsing result, and interaction features between the target table and the entity words are input into a query language conversion model to construct the SQL statement, and the interaction features between the target table and the entity words and syntax information input into the natural language are introduced into a coding layer of the query language conversion model. By taking the target table obtained by matching as an input, a feature network can be significantly reduced, the complexity of the coding layer can be reduced, and multi-field and multi-value scenarios of complex tables can be adapted. By taking field values and interaction features of questions from users as input features for statement analysis and assembly, the accurate correspondence between the corpus content and the table field when only the field values are mentioned in the input corpus can be ensured. By extracting the parsing result of the input corpus for assembling the SQL statement, the accurate correspondence between the SQL statement and the natural language in statement assembly can be ensured.

Optionally, the invoking a query language conversion model based on coded features to generate an SQL statement includes: obtaining a query target column, an aggregation operation method of the query target column, a filtering condition target column, a comparison logic and a comparison value corresponding to the filtering condition target column, and a classification prediction result of a logic between filtering conditions, and generating the SQL statement in combination with a preset SQL syntax specification and an association relationship between tables.

Optionally, the receiving an input corpus and invoking a syntax error correction method to obtain an error-corrected input corpus includes: performing word segmentation on the input corpus, and obtaining a context-specific word segmentation combination in combination with a window translation method; scoring the word segmentation combination by using a pre-trained linguistic statistical model, and taking a site with the largest deviation from mean in a score as a potential error site; obtaining a candidate character set by using preset homophones and table-similar words and preset common confusion dictionaries for a character corresponding to the potential error site; and scoring a statement in which a candidate character replaces the character corresponding to the error site again to obtain an optimal result as an error correction result.

Optionally, the invoking an intention classification method based on the error-corrected input corpus includes: predicting whether the input corpus belongs to a preset retrieval intention by using a pre-trained text classification model; performing entity word extraction according to the input corpus if the input corpus belongs to the preset retrieval intention; and performing a non-retrieval intention prompt and executing an operation of no response from a table data retrieval service if the input corpus does not belong to the preset retrieval intention.

Optionally, the extracting entity words according to the input corpus includes: extracting entity words in the input corpus as potential entity words; performing word segmentation and part-of-speech extraction on the input corpus as language segmented words; and taking the potential entity words and the language segmented words as the entity words.

Optionally, the extracting entity words in the input corpus as potential entity words includes: performing representation normalization processing on the input corpus to obtain a normalization statement; and performing time and value extraction on the normalization statement according to a regular expression, invoking a pre-trained NER model to extract a common name of the normalization statement, and taking the extracted entity words and corresponding entity word types as the potential entity words.

Optionally, the table entity recall and target table recall method includes: matching a table entity mapping table according to the entity words to obtain a table entity recall result; and querying data of a table relationship graph based on the table entity recall result, and obtaining a query result of the shortest path in combination with a path search algorithm.

Optionally, the language conversion model includes: a model body adopting an ERINE pre-training model framework; a coding layer, using coded results of character features of the input corpus, character features of table listing, matching features of corpus entities and table entities, and parsing features as input respectively; and a reasoning layer, taking a query target column, an aggregation operation method of the query target column, a filtering condition target column, a comparison logic and a comparison value corresponding to the filtering condition target column, and a logic between filtering conditions as prediction targets.

Optionally, a training method of the language conversion model includes: performing joint training by taking the difference between a task prediction result and an actual result of the reasoning layer as a loss value and the sum of minimum loss values as an iteration target.

Optionally, prior to searching the table entity word library, the method further includes: determining a data retrieval table; extracting enumeration fields in the data retrieval table, extracting field information, and establishing a mapping relationship table containing field values, field names and table names; extracting entity word records containing field names and table names of enumeration and numerical type fields from the data retrieval table, and adding into the mapping relationship table; invoking a fasttext word vector model to perform vectorization processing on the field values; and taking the mapping relationship table as the table entity word library.

Embodiments in a second aspect of the present application provide an intelligent session server based on table data retrieval, including: a preprocessing module, configured to receive an input corpus, and invoke a syntax error correction method to obtain an error-corrected input corpus; an analysis module, configured to query a preset high-frequency question SQL library based on the error-corrected input corpus, return a found SQL result if hitting, invoke an intention classification method based on the error-corrected input corpus and return an unanswerable state if missing, and invoke an entity extraction and parsing method based on the input corpus if hitting a retrieval intention to obtain an entity extraction and parsing result; a screening module, configured to search, based on an entity extraction result, a table entity word table for a table entity query result, invoke a table recall method based on the table entity query result to obtain a target table, and screen corresponding table entity word information; a generation module, configured to perform feature splicing and feature coding based on the entity extraction and parsing result of the input corpus and the table entity word information, and invoke a query language conversion model based on coded features to generate an SQL statement; and a feedback module, configured to submit to a database execution engine based on the SQL statement to obtain an execution result, and return the execution result through an interface as a reply of the input corpus.

Optionally, the generation module is further configured to obtain a query target column, an aggregation operation method of the query target column, a filtering condition target column, a comparison logic and a comparison value corresponding to the filtering condition target column, and a classification prediction result of a logic between filtering conditions, and generate the SQL statement in combination with a preset SQL syntax specification and an association relationship between tables.

Optionally, the preprocessing module is configured to: perform word segmentation on the input corpus, and obtain a context-specific word segmentation combination in combination with a window translation method; score the word segmentation combination by using a pre-trained linguistic statistical model, and take a site with the largest deviation from mean in a score as a potential error site; obtain a candidate character set by using preset homophones and table-similar words and preset common confusion dictionaries for a character corresponding to the potential error site; and score a statement in which a candidate character replaces the character corresponding to the error site again to obtain an optimal result as an error correction result.

Optionally, the analysis module is configured to: predict whether the input corpus belongs to a preset retrieval intention by using a pre-trained text classification model; perform entity word extraction according to the input corpus if the input corpus belongs to the preset retrieval intention; and perform a non-retrieval intention prompt and execute an operation of no response from a table data retrieval service if the input corpus does not belong to the preset retrieval intention.

Optionally, the analysis module is further configured to: extract entity words in the input corpus as potential entity words; perform word segmentation and part-of-speech extraction on the input corpus as language segmented words; and take the potential entity words and the language segmented words as the entity words.

Optionally, the analysis module is further configured to: perform representation normalization processing on the input corpus to obtain a normalization statement; and perform time and value extraction on the normalization statement according to a regular expression, invoke a pre-trained NER model to extract a common name of the normalization statement, and take the extracted entity words and corresponding entity word types as the potential entity words.

Optionally, the table entity recall and target table recall method includes: matching a table entity mapping table according to the entity words to obtain a table entity recall result; and querying data of a table relationship graph based on the table entity recall result, and obtaining a query result of the shortest path in combination with a path search algorithm.

Optionally, the language conversion model includes: a model body adopting an ERINE pre-training model framework; a coding layer, using coded results of character features of the input corpus, character features of table listing, matching features of corpus entities and table entities, and parsing features as input respectively; and a reasoning layer, taking a query target column, an aggregation operation method of the query target column, a filtering condition target column, a comparison logic and a comparison value corresponding to the filtering condition target column, and a logic between filtering conditions as prediction targets.

Optionally, a training method of the language conversion model includes: performing joint training by taking the difference between a task prediction result and an actual result of the reasoning layer as a loss value and the sum of minimum loss values as an iteration target.

Optionally, the server further includes: a construction module, configured to determine, prior to searching the table entity word library, a data retrieval table; extract enumeration fields in the data retrieval table, extract field information, and establish a mapping relationship table containing field values, field names and table names; extract entity word records containing field names and table names of enumeration and numerical type fields from the data retrieval table, and add into the mapping relationship table; invoke a fasttext word vector model to perform vectorization processing on the field values; and take the mapping relationship table as the table entity word library.

Thus, the present application has at least the following beneficial effects.

In the embodiments of the present application, an entity word library is constructed for a data retrieval table, prior information of the table is fully extracted, table information is enhanced, and the accuracy of the semantic expression of the table information is improved. After receiving an input corpus, the matching comparison between the input corpus and the data retrieval table is switched to the comparison between entity words of the input corpus and a table entity word library, a scheme for inputting a natural language and a multi-table association query is provided, the statement length of the comparison is shortened, and rapid matching can be achieved. To ensure that an SQL statement accurately corresponds to the natural language, the input corpus, a parsing result, and interaction features between a target table and the entity words are input into a query language conversion model to construct the SQL statement, and the interaction features between the target table and the entity words and syntax information input into the natural language are introduced into a coding layer of the query language conversion model. By taking the target table obtained by matching as an input, a feature network can be significantly reduced, the complexity of the coding layer can be reduced, and multi-field and multi-value scenarios of complex tables can be adapted. By taking field values and interaction features of questions from users as input features for statement analysis and assembly, the accurate correspondence between the corpus content and the table field when only the field values are mentioned in the input corpus can be ensured. By extracting the parsing result of the input corpus for assembling the SQL statement, the accurate correspondence between the SQL statement and the natural language in statement assembly can be ensured. Therefore, the present application may adapt to diversified user questions, and achieve the accurate correspondence between the SQL statement and the natural language. Also, the feature network is small, and the coding complexity is low, thereby reducing the implementation difficulty and improving the computing efficiency.

Additional aspects and advantages of the present application will be set forth in part in the following description, will be obvious in part from the following description, or may be learned by practice of the present application.

### Brief Description of the Drawings

The above and/or additional aspects and advantages of the present application will become apparent and more readily appreciated from the following description of the embodimentsin conjunction with the attached drawings, where:
Fig. 1 schematically shows a flowchart of an intelligent session method based on table data retrieval according to an embodiment of the present application;
Fig. 2 is a schematic diagram of an intelligent session system for the Internet of vehicles according to one embodiment of the present application;
Fig. 3 schematically shows a flowchart of an overall implementation of an intelligent session according to one embodiment of the present application; and
Fig. 4 is a schematic diagram of an intelligent session server based on table data retrieval according to an embodiment of the present application.

### Detailed Description of the Embodiments

Embodiments of the present application will be described below in detail, and examples of the embodiments are illustrated in the accompanying drawings, wherein like or similar reference numerals represent the same or similar elements or elements having the same or similar function throughout. The embodiments described below with reference to the accompanying drawings are exemplary, are intended to be illustrative of the present application, and are not to be construed as limiting the present application.

An intelligent session method and server based on table data retrieval according to embodiments of the present application will now be described with reference to the accompanying drawings. In view of the problems in the related art mentioned in the above Background of the Invention that the technology is difficult to adapt to multi-field and multi-value scenarios of complex tables, is difficult to adapt to diversified user questions, and cannot achieve accurate correspondence, and the training stage requires high memory and computing power, the present application provides an intelligent session method based on table data retrieval. In this method, an entity word library is constructed for a data retrieval table, prior information of the table is fully extracted, table information is enhanced, and the accuracy of the semantic expression of the table information is improved. After receiving an input corpus, the matching comparison between the input corpus and the data retrieval table is switched to the comparison between entity words of the input corpus and a table entity word library, a scheme for inputting a natural language and a multi-table association query is provided, the statement length of the comparison is shortened, and rapid matching can be achieved. To ensure that a structured query language (SQL) statement accurately corresponds to the natural language, the input corpus, a parsing result, and interaction features between a target table and the entity words are input into a query language conversion model to construct the SQL statement, and the interaction features between the target table and the entity words and syntax information input into the natural language are introduced into a coding layer of the query language conversion model. By taking the target table obtained by matching as an input, a feature network can be significantly reduced, the complexity of the coding layer can be reduced, and multi-field and multi-value scenarios of complex tables can be adapted. By taking field values and interaction features of questions from users as input features for statement analysis and assembly, the accurate correspondence between the corpus content and the table field when only the field values are mentioned in the input corpus can be ensured. By extracting the parsing result of the input corpus for assembling the SQL statement, the accurate correspondence between the SQL statement and the natural language in statement assembly can be ensured. Therefore, the method may adapt to diversified user questions, and achieve the accurate correspondence between the SQL statement and the natural language. Also, the feature network is small, and the coding complexity is low, thereby reducing the implementation difficulty and improving the computing efficiency.

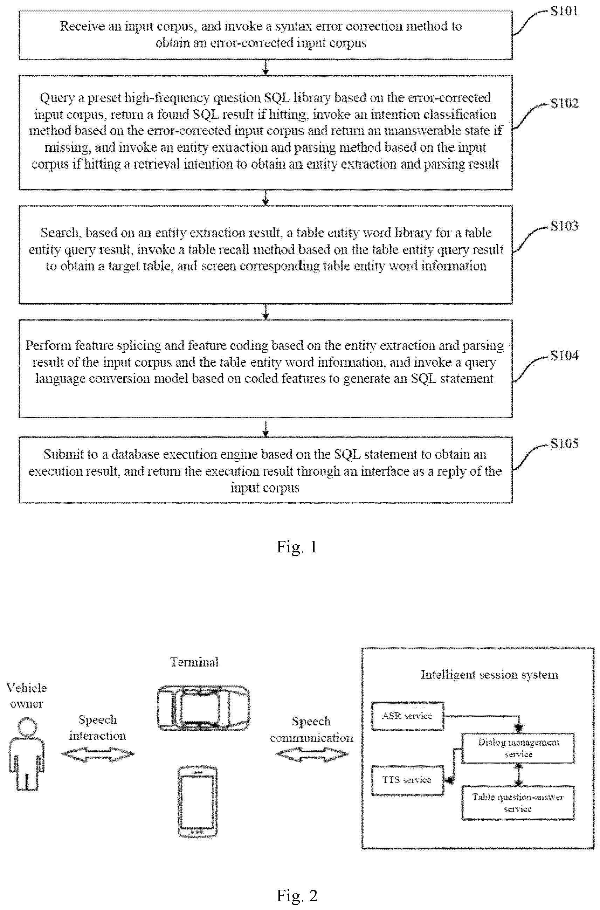

Specifically, Fig. 1 schematically shows a flowchart of an intelligent session method based on table data retrieval according to an embodiment of the present application.

As shown in Fig. 1, the intelligent session method based on table data retrieval mainly includes the following steps.

In step S101, an input corpus is received, and a syntax error correction method is invoked to obtain an error-corrected input corpus.

In the embodiments of the present application, the operation of receiving an input corpus and invoking a syntax error correction method to obtain an error-corrected input corpus includes: performing word segmentation on the input corpus, and obtaining a context-specific word segmentation combination in combination with a window translation method; scoring the word segmentation combination by using a pre-trained linguistic statistical model, and taking a site with the largest deviation from mean in a score as a potential error site; obtaining a candidate character set by using preset homophones and table-similar words and preset common confusion dictionaries for a character corresponding to the potential error site; and scoring a statement in which a candidate character replaces the character corresponding to the error site again to obtain an optimal result as an error correction result.

It will be appreciated that the pre-trained language model is invoked to perform syntax error correction adjustments on the input corpus. The details are as follows:
Questions from a speech input or text input of a user may have syntax errors, which affect the accuracy of downstream semantic understanding. In the present embodiment, a pre-trained kenlm model may be used to score a list processed by ngram (a language model commonly used in large vocabulary continuous speech recognition) after word segmentation. According to a threshold of deviation from mean, error sites are identified. In combination with pre-made homophones and table-similar words, and common confusion dictionaries, words and phrases at error sites are replaced to generate a candidate set. If a kenlm score of the candidate set is 5% higher than that of an original sentence, the original statement is replaced as the output after error correction, otherwise, the original statement is reserved for the output.

It should be noted that embodiments of the present application provide a method for semantic understanding of a natural language, thereby improving the fault tolerance of a system for syntax errors of input questions.

In step S 102, a preset high-frequency question SQL library is queried based on the error-corrected input corpus, a found SQL result is returned if hitting, an intention classification method is invoked based on the error-corrected input corpus and an unanswerable state is returned if missing, and an entity extraction and parsing method is invoked based on the input corpus if hitting a retrieval intention to obtain an entity extraction and parsing result.

The preset high-frequency question SQL library may be established according to actual situations, which is not particularly limited.

It will be appreciated that in the embodiments of the present application, an input corpus may be received, entity word extraction and dependency parsing may be respectively performed according to the input corpus to obtain entity word extraction and parsing results, and before extracting entity words according to the input corpus, the following steps may be performed first: identifying whether the input corpus belongs to a retrieval intention; performing the step of extracting entity words according to the input corpus if the input corpus belongs to a retrieval intention; and performing a non-retrieval intention prompt and executing an operation of no response from a table data retrieval service if the input corpus does not belong to the preset retrieval intention.

In some embodiments, the embodiments of the present application may collect corpus records of user-side historical inputs and establish a high-frequency question SQL library. By recording user-side high-frequency natural language questions and an association relationship between a natural language and a data query language, a high-frequency frequently asked questions (FAQ) library is established, so as to quickly and accurately respond to the user-side high-frequency focused data query questions.

The user-side high-frequency natural language questions may be collected in historical consultation logs and fetching requirements, and the high-frequency data query language may be collected in a data query log of a database. For example, SQL query statements with a query frequency of 3 or more may be extracted, and natural language translation may be performed to convert the query language into a natural language. A corresponding relationship between the natural language and the data query language may be manually translated and tagged. In addition, the natural language questions may be further generalized, and generalized sentences are vectorized by using a sentence vector model and are stored in a faiss sentence vector library in the form of sentence vectors, so as to achieve efficient retrieval and matching of input questions.

Therefore, in the embodiments of the present application, after an input corpus is received and before entity words are extracted according to the input corpus, the following steps may be firstly performed:
In step 1, a high-frequency question SQL library is invoked to perform similarity matching on a natural language so as to generate similarity.
In step 2, SQLs with the similarity reaching a matching threshold are extracted from the high-frequency question SQL library as an SQL statement, and the step of generating reply information by executing the SQL statement is performed.
In step 3, if there are no SQLs with the similarity reaching the matching threshold, the step of extracting entity words according to the input corpus is performed.

After a high-frequency FAQ library is established, upon reception of an input corpus from a user, in order to improve the efficiency, the high-frequency FAQ library is firstly matched before performing corpus analysis. By means of a sentence vector result of input questions of the user, cosine similarity may be used to search for the most similar targets in the faiss sentence vector library. If the TOP1 result reaches the threshold, it is considered that sentences are close to be equivalent, an SQL of the recall sentence is directly used as an SQL generation result of an input statement, the step of performing semantic analysis on the input corpus is skipped, and the SQL statement may be directly returned.

It should be noted that it is determined whether the input questions of the user belong to a retrieval intention, and if the input questions of the user do not belong to the retrieval intention, the result of no response from the system is returned. Furthermore, response results of faq and knowledge graphs may be preferentially used. This is not limited herein.

In some embodiments, the embodiments of the present application may use a text binary classification model trained by textcnn to determine the retrieval intention, and also provide a method for semantic understanding of a natural language, thereby improving the filtering ability of the system for unresponsive question types. Also, a method for generating and using a high-frequency FAQ library is provided, which ensures the timeliness and accuracy of high-frequency question response.

In the embodiments of the present application, the operation of invoking an intention classification method based on the error-corrected input corpus includes: predicting whether the input corpus belongs to a preset retrieval intention by using a pre-trained text classification model; performing entity word extraction according to the input corpus if the input corpus belongs to the preset retrieval intention; and performing a non-retrieval intention prompt and executing an operation of no response from a table data retrieval service if the input corpus does not belong to the preset retrieval intention.

Specifically, the input corpus refers to a question received from a user side. An intelligent session system of the Internet of vehicles shown in Fig. 2 is taken as an example. After collecting a speech signal input, a microphone device of a mobile phone or an on-vehicle terminal transmits speech binary stream information to the intelligent session system via a speech assistant. In the system, an ASR (speech to text service) is first triggered to complete speech to text. The generated text is taken as an input corpus, and text information is transferred to a dialog management service module. The module is responsible for managing an invoking strategy of a question-answer interface. In the present embodiment, the question-answer interface is a table session service. That is, according to the method shown in the present method embodiment, the conversion from a natural language to a query language is completed in the table session service, the generated SQL completes query of an answer in an execution engine, and a query result is returned to the dialog management service module in the form of text via a table question-answer service, and is responded.

Specifically, the response requires semantic understanding of the natural language for the input corpus in order to clarify a question object to be understood. Specifically, the semantic understanding mainly includes two parts: extracting entity words according to the input corpus; and performing dependency parsing on the input corpus to obtain a parsing result.

The entity extraction mainly extracts potential entity words in the input natural language so as to match with table entity words to obtain word pairs of input segmented words and the table entity words.

The dependency parsing mainly aims at word segmentation results and part-of-speech information obtained from word segmentation of the input corpus, predicts a relationship between words, and is used to supplement the features of the relationship between words. A dependency parsing tool of Hanlp (big data integrated platform) may be specifically used. This is not limited in the present embodiment. The categories and colloquial introduction of a dependency are presented in the table below.

Assuming that the input corpus is "Check the model with the highest sales volume in March 2022", a targeted dependency relationship is shown in Table 1 below:

**Table 1**

| Relationship type | Abbreviation | Example |
|---|---|---|
| Subject-predicate relationship | SBV | sales volume -- (SBV) -- > maximum |
| Verb-object relationship | VOB | model -- (VOB) -- >check |
| Indirect object relationship | IOB | I will give you a book: give -- (IOB) -- > you |
| Prepositional object | FOB | He can accept any jobs: job < -- (FOB) -- accept) |
| Concurrent | DBL | I asked you for help: you -- (DBL) -- > asked |
| Attributive-central relationship | ATT | maximum -- (ATT) -- > model |
| Adverbial-central structure | ADV | March 2022 -- (ADV) -- > sales volume |
| Verb-complement structure | CMP | it -- (CMP) -- > check |
| Coordinating relationship | cOO | model and price: price -- (COO) -- > model |
| Preposition-object relationship | POB | within the industry (->within) |
| Left additional relationship | LAD | model and price: and -- (LAD) -- > model |
| Right additional relationship | RAD | and -- (RAD) -- > maximum |
| Independent structure | IS | Two single sentences are independent of each other structurally |
| Core relationship | HED | check -- (HED) -- > ##core## |

In step S103, a table entity word library is searched for a table entity query result based on an entity extraction result, a table recall method is invoked based on the table entity query result to obtain a target table, and corresponding table entity word information is screened.

It will be appreciated that the embodiments of the present application may perform entity word matching on entity words according to a table entity word library to obtain table matching words, and extract a target table corresponding to the table matching words.

In the embodiments of the present application, the table entity recall and target table recall method includes: matching a table entity mapping table according to the entity words to obtain a table entity recall result; and querying data of a table relationship graph based on the table entity recall result, and obtaining a query result of the shortest path in combination with a path search algorithm.

Specifically, the table entity word library contains several entity words and related word information (including but not limited to entity word information such as entity word types), and the extracted entity words are matched and compared with various entity words in the table entity word library one by one so as to determine whether a corpus object matching the current input corpus exists in the data retrieval table. In order to improve the comparison efficiency and improve the comparison accuracy, in the present embodiment, entity word extraction is performed on the input corpus, a table entity word library is constructed on the data retrieval table, and the matching comparison between the input corpus and the data retrieval table is switched to the comparison between the entity words of the input corpus and the table entity word library to eliminate useless non-entity word information and shorten the statement length of the comparison thereby improving the comparison efficiency. Furthermore, the matching accuracy can be ensured by comparing the retained key entity word information which reflects the meaning of the statement.

It should be noted that the process of matching comparison between the table entity word library and the entity words may refer to a matching comparison mode for words or statements in the related art, and this is not limited in the present embodiment. For example, the extracted entity words and corresponding entity word categories may be vectorized using fasttext, and table entity words with cosine similarity greater than 0.9 are recalled to acquire field names corresponding to the table entity words as table matching words. If the extracted entity words contain a time type, all fields related to time in the table entity word library may be recalled. For example, fields containing a numerical value type, fields with numerical values within an interval and fields with consistent units are taken as matching objects, and a table attribute word field name, a segmented word, a table entity word, and a table field name are acquired to table a set of word pairs. In the present embodiment, only the above implementation is described as an example, other modes may be described with reference to the present embodiment, and detailed descriptions thereof are omitted herein.

After table matching words are obtained by matching, a table with the strongest association with each table matching word is extracted from the data retrieval table as the target table. The mode of determining the target table in the present embodiment is not limited. For example, the target table may be determined according to the number of table matching words contained in each table, and may also be determined according to the number of associated words of the table matching words and the strength of the association relationship.

In order to deepen the understanding of the mode of determining the target table, a target table determination mode based on graph data is proposed herein as follows:
In some embodiments, prior to receiving the input corpus, an association relationship between data objects (e.g. tables and fields) in the data retrieval table may be further extracted and stored in the graph data. Then the operation of extracting the target table corresponding to the table matching words may be specifically: extracting the shortest path in a path set corresponding to the table matching words according to the graph data, and determining a target table corresponding to the shortest path.

The construction of a table schema (the organization and structure of a database) is performed in the form of graph data, and triplet data is generated based on an association relationship between tables provided by a data dictionary and an inclusion relationship between tables and fields, is stored in a graph database, and is used for screening a target table and establishing an association relationship when querying across tables. And accordingly, after linking the matched table entity words to the graph data, a path search algorithm may be used to acquire a path set of sub-graphs. In the present embodiment, all the paired segmented words are preferably hit, and the shortest path with the least number of tables is contained. The shortest path contains a table name, which is a target table, and a field name to which an entity word in a paired field is mapped is a target field.

In the method for determining the target table, after linking the matched table entity words to entities of the graph data based on the matching information of the recalled entity words, a path set of sub-graphs is acquired, and then a target table with the strongest association is determined according to the number and length of paths, so that the extraction speed can be significantly improved.

In step S 104, feature splicing and feature coding are performed based on the entity extraction and parsing result of the input corpus and the table entity word information, and a query language conversion model is invoked based on coded features to generate an SQL statement.

It will be appreciated that a query language conversion model is used to perform SQL statement assembly in the present embodiment. The query language conversion model refers to a model for converting a natural language into a query language (SQL), and the query language conversion model may perform model construction based on an seq2sql (a model for generating SQL through a natural language using reinforcement learning) framework. This is not limited herein.

In the embodiments of the present application, the operation of invoking a query language conversion model based on coded features to generate an SQL statement includes: obtaining a query target column, an aggregation operation method of the query target column, a filtering condition target column, a comparison logic and a comparison value corresponding to the filtering condition target column, and a classification prediction result of a logic between filtering conditions, and generating the SQL statement in combination with a preset SQL syntax specification and an association relationship between tables.

In the embodiments of the present application, the language conversion model includes: a model body adopting an ERINE pre-training model framework; a coding layer, using coded results of character features of the input corpus, character features of table listing, matching features of corpus entities and table entities, and parsing features as input respectively; and a reasoning layer, taking a query target column, an aggregation operation method of the query target column, a filtering condition target column, a comparison logic and a comparison value corresponding to the filtering condition target column, and a logic between filtering conditions as prediction targets.

A training method of the language conversion model includes: performing joint training by taking the difference between a task prediction result and an actual result of the reasoning layer as a loss value and the sum of minimum loss values as an iteration target.

Specifically, in order to ensure that the SQL statement accurately corresponds to the input corpus, in the present embodiment, the input corpus, the parsing result, and interaction features between the target table and the entity words are input into the query language conversion model, the interaction features between the target table and the entity words and syntax information input into the natural language are introduced into a coding layer of the query language conversion model, and a response language SQL is constructed according to the language features of the input corpus. Only based on the target table obtained by matching, rather than taking the field value of each field of the associated table as the input, the feature network can be significantly reduced, the multi-field and multi-value scenarios of complex tables can be adapted, and the validity and accuracy of the analysis can be improved. Also, the efficiency of the training stage and the prediction settlement can be improved, and the user experience can be improved. In addition, in the present embodiment, by performing analysis and assembly of statements with interaction features of field values and user questions as input features, the problem of accurate correspondence between questions and table fields when only the field values are mentioned in the user questions can be solved. Furthermore, in the present embodiment, the parsing result of the input corpus is further extracted to assemble the SQL statement, thereby ensuring the smooth logic of segmented word assembly in the statement assembly and the reasonable syntax.

In the present embodiment, statement assembly is performed according to the input corpus, the parsing result, and the interaction features between the target table and the entity words, thereby ensuring the comprehensiveness of feature information and improving the prediction accuracy. Also, the amount of overall information is limited, thereby effectively controlling the prediction and training time.

In step S 105, submission to a database execution engine is performed based on the SQL statement to obtain an execution result, and the execution result is returned through an interface as a reply of the input corpus.

It will be appreciated that the SQL is submitted to a database for execution. If the execution is successful, an execution result is returned, and the generated information is taken as reply information. After the generated SQL completes query of an answer in an execution engine of the database, a query result may be returned to the dialog management service module in the form of text via a table question-answer service. The query result text is converted into speech through a text to speech (TTS) service. The speech information is returned to a speech assistant of a terminal in the form of a binary stream, and a speaker of the terminal is invoked to perform speech broadcast so as to realize information reply.

However, if the execution fails, the table question-answer service may prompt that the answer cannot be accurately responded. In the present embodiment, the processing mode in this case is not limited. The system may invoke a traditional intelligent answer method (such as a knowledge graph) to perform reply query, or perform query according to a pre-configured high-frequency question-answer library, etc. Corresponding settings may be made according to actual usage requirements, and detailed descriptions thereof are omitted herein.

In the above embodiments, the specific extraction mode for extracting entity words according to the input corpus is not limited. In order to ensure the comprehensive extraction of the entity words, in some embodiments, the extracting entity words according to the input corpus includes: extracting entity words in the input corpus as potential entity words; performing word segmentation and part-of-speech extraction on the input corpus as language segmented words; and taking the potential entity words and the language segmented words as the entity words. The extracting entity words in the input corpus as potential entity words includes: performing representation normalization processing on the input corpus to obtain a normalization statement; and performing time and value extraction on the normalization statement according to a regular expression, invoking a pre-trained NER model to extract a common name of the normalization statement, and taking the extracted entity words and corresponding entity word types as the potential entity words.

Specifically, the operation of extracting entity words according to the input corpus may be executed according to the following sub-steps:
At S21, entity words in the input corpus are extracted as potential entity words.

The model is directly invoked to extract entity words of custom types from the input corpus, and the extracted entity words and entity word information (such as entity word types) are taken as potential entity words.

The entity word extraction directly aiming at the input corpus may be correspondingly set according to the type of the input corpus, the type of entity words contained therein and the main analysis objects. This is not limited herein. To ensure the comprehensiveness of direct extraction, in some embodiments, the operation of directly extracting entity words for the input corpus may be executed according to the following steps:
At S211, representation normalization processing is performed on the input corpus to obtain a normalization statement.
At S212, time and value extraction is performed on the normalization statement according to a regular expression, a pre-trained NER model is invoked to extract a common name of the normalization statement, and the extracted entity words and corresponding entity word types are taken as the potential entity words.

After the conversion of Chinese characters to digitals and the normalization of unit representation for the input natural language questions, a regular expression is used to extract the pattern of time and numerical units. The entity extraction model used in this case is mainly used to extract the names of people, places and institutions in the input questions. The model may be BiLSTM+CRF, which is trained based on a tagging data set of People's Daily. This is not limited thereto.

At S22, word segmentation and part-of-speech extraction are performed on the input corpus as language segmented words.

After adding entities of a field value, a field name and a table name to a custom dictionary, word segmentation and part-of-speech tagging are performed on the user input corpus, and segmented words generated after word segmentation and part-of-speech tagging are taken as language segmented words.

It should be noted that the word segmentation tool is not limited in the present embodiment. For example, the word segmentation may be completed by means of a Hanlp word segmentation tool, specific reference may be made to the related art, and detailed descriptions thereof are omitted herein.

At S23, the potential entity words and the language segmented words are taken as entity words.

In the present embodiment, the extraction of the entity words is divided into two parts: corpus-based direct extraction and word segmentation extraction, and corpus word segmentation is performed in addition to the direct extraction of the entity words to supplement the corpus so as to ensure the comprehensiveness of the information extraction.

In some embodiments, in the above embodiments, the operation of invoking the query language conversion model to perform statement assembly according to the input corpus, the parsing result, and the interaction features between the target table and the entity words may be specifically executed according to the following sub-steps:
At S51, the input corpus, the parsing result, the target table, and the entity words are coded and then vectorized as input features.

In the coding layer, user input questions, table information, entity extraction results, and dependency parsing results are coded and then vectorized, and the features are separated by [SEP].

Codes of the user input questions contain a sequence W=[w₁, ..., wᵢ, ..., wₙ] of a series of characters, where wi represents an i^{th} character in a natural language question.

The table information contains column names, represented as C=[c₁, ..., cᵢ, ..., cₙ], where cᵢ represents the column name of an i^{th} column in the associated table, each column name is composed of one or more characters, and the unit value corresponding to each column name is represented as c₁=[c_{i_1}, ..., c_{i_i}, ..., c_{i_n}], where c_{i_i} represents an i^{th} character code of an i^{th} column of table name.

The entity extraction results contain entity words in the question, hit table entity words, and field names and type names corresponding to the table entity words. WC=[[qw₁, tw₁, c₁, t₁], ..., [qwᵢ, tw₁, cᵢ, tᵢ], ..., [qwₙ, twₙ, cₙ, tₙ]], where qwᵢ=[q₁, ..., qₙ], twᵢ=[t₁, ..., tₙ], and Cᵢ=[c₁, ..., cₘ]. qwᵢ and qᵢ are respectively an input segmented word in an i^{th} group and an i^{th} character of the segmented word in the recall word pair of S34 and S35. twᵢ and tᵢ are respectively a table entity word in the i^{th} group and an i^{th} character thereof in the word pair. Cᵢ and cᵢ are respectively a table field name in the i^{th} group and an i^{th} character thereof in the word pair. tᵢ is the type of the word pair, including three types: VALUE/COLUMN/TABLE.

The dependency parsing results extract relationship pairs of entity words and other words, S=[[wᵢ, wⱼ, s_type], ...], where wᵢ is an i^{th} entity word, wⱼ is a word that has dependency with wi, and s_type is a dependency type. The overall input sequence is represented as X="[XLS], W, [SEP], C, [SEP], WC, [SEP], S, [SEP]", where [XLS] represents a starting marker, W represents a natural language question, [SEP] represents a separator between fragments, C represents a column name of an association table, WC represents a word pair of an entity word, a table entity word and a field name in the natural language question, and S represents a word pair and a dependency formed by the entity word and a context word with dependency in the natural language question.

At S52, multi-task joint prediction is performed on the input features to obtain a prediction result of each sub-task. The multi-task joint prediction includes: a SELECT target column prediction, an aggregation method prediction of a target column, a target column prediction of a WHERE condition, a logic operation prediction between WHERE connection conditions, a numerical value prediction of the WHERE condition, and a comparison logic prediction of the WHERE condition.

In the present embodiment, the prediction task is split into 6 sub-tasks: sc (SELECT target column), sca (aggregation method of target column), wc (target column of WHERE condition), wco (logic operation between WHERE connection conditions), wv (numerical value of WHERE condition), and wo (comparison logic of WHERE condition).

The sc (SELECT target column) sub-task is to perform binary classification prediction on whether all fields of the target table belong to the SELECT target column. The sca (aggregation method of target column) is to perform eight binary classification predictions: a cluster type (", 'MAX', 'MIN', 'COUNT', 'SUM', 'AVG', 'ORDER BY', and 'HAVING') on a target column of sc prediction. The prediction results of the first six operations take the maximum prediction value category. The wc (target column of WHERE condition) is binary classification for determining whether a field in a word pair of which the type is value in an entity extraction result is a WHERE target column. The wv (numerical value of WHERE condition) refers to a question entity word in the word pair of which the type is value in the entity extraction result based on the prediction result of wc. The wo (comparison logic of WHERE condition) is septenary prediction for type comparison on a target column in the category of order in sc and a target column prediction result of wc ('>','<','>=','<=','!=','asc','desc'). The wco (logic operation between WHERE connection conditions) is trinary prediction for determining a connection logic (",'AND','OR') between the target columns of the wc prediction.

In the training process, the prediction results of the 6 sub-tasks are calculated with the target value respectively to obtain loss values which are accumulated as a total loss value of joint training of the 6 sub-tasks.

At S53, according to the prediction result of each sub-task, sub-statements are assembled according to an SQL splicing rule to obtain an SQL statement.

In the actual prediction process, based on the prediction results of the 6 sub-tasks, the sub-statements are assembled with sql syntax to obtain the SQL statement.

It should be noted that if the target columns in SELECT and WHERE belong to different tables, the tables may be spliced preferentially based on the table schema information, and a JOIN syntax structure can be introduced.

The present embodiment provides an SQL splicing method based on six-task training prediction, which improves the accuracy and reasoning efficiency of the algorithm.

In some embodiments, prior to searching the table entity word library, the method further includes: determining a data retrieval table; extracting enumeration fields in the data retrieval table, extracting field information, and establishing a mapping relationship table containing field values, field names and table names; extracting entity word records containing field names and table names of enumeration and numerical type fields from the data retrieval table, and adding into the mapping relationship table; invoking a fasttext word vector model to perform vectorization processing on the field values; and taking the mapping relationship table as the table entity word library.

Specifically, the data retrieval table stores information related to the natural language in the intelligent session system by means of structured data storage and presentation, and the conversion from the natural language to the query language is completed in the table question-answer service, which can help the rapid generation of the session reply information. A header of the data retrieval table is composed of a series of field names, the data of the table is composed of field values of various fields, and the tables may be associated with each other through the same field or fields. Specifically, the specific format and storage form of the data retrieval table based on the intelligent session system may be referred to the introduction of the related art and will not be described in detail herein.

In order to fully extract the prior information of the table and ensure the subsequent rapid matching and comparison with the input corpus, in the present embodiment, the entity words and word-related information in a statistical data retrieval table are recorded, and the table entity library is constructed to realize the enhancement of the table information. The entity word types contained in different tables are different, and the construction of a table entity word library under each entity word type may be correspondingly set according to application scenarios and use requirements. This is not limited herein.

In some embodiments, the entity words in the statistical data retrieval table may specifically aim at fields of an enumeration type in the table, field values are extracted, a mapping relationship table containing the field values, field names and a table name is established, and the field type may be tagged as a value type. Entity word records containing field names and table names of enumeration and numerical type fields are added, types being a column type and a table type, respectively. Then, for a field value column, vectorization is performed by using a word vector model pre-trained by fasttext (a word vector and text classification tool), and a vector representation of an entity word is stored by using faiss (Facebook AI Similarity Search, referring to a mass data storage library). The invoked fasttext word vector model may be obtained by training based on an encyclopedia corpus.

By means of the above construction method, a mapping relationship between entity levels of a field value (VALUE), a field name (COLUMN) and a table name (table) by summarizing enumerated types of field values of fields, field names and table names for associating with segmented words in a natural language, so as to adapt to most entity word types. In the present embodiment, the above construction method is merely introduced as an example, and other construction methods may all be referred to the above description and which will not be described in detail herein.

In some embodiments, the table names and the field names in the database are generally in English, and in order to facilitate the application of the Chinese question-answer scenarios, prior information of the table is further extracted, and information enhancement may also be performed by adding (Chinese) comments, etc. Specifically, when a database is built, a data dictionary (meaning that data items, data structures, data streams, data storage, processing logic, etc. of the data are defined and described) is typically constructed, and the table and field names are commented. Comment information of the data dictionary may be used to supplement comments for the table information. On the basis of the data dictionary, the Chinese words and phrases may be used to explain the field names, the table names, meanings, and uses more fully, and the quality of the comment information can be improved through manual verification. The manual verification is mainly to repair and fill some incomplete, misrepresentation and missing information. It is required to keep the actual information in the expression and field consistent and as short as possible.

Further, in some embodiments, the numerical fields may be supplemented with tagging information for the purpose of information enhancement, the supplemented tagging information for the numerical fields may include a supplementary description for extracting information such as unit information, maximum value information and minimum value information as the field enhanced information, and a table attribute word library is generated for the purpose of subsequent information association and matching.

It should be noted that in addition to the statistical entity words, in the present embodiment, two modes of introducing information enhancement are introduced by merely perfecting Chinese comments and adding tagging information to numerical fields, and other modes of implementing data enhancement of the data retrieval table are applicable to the present application. Detailed descriptions thereof are omitted herein.

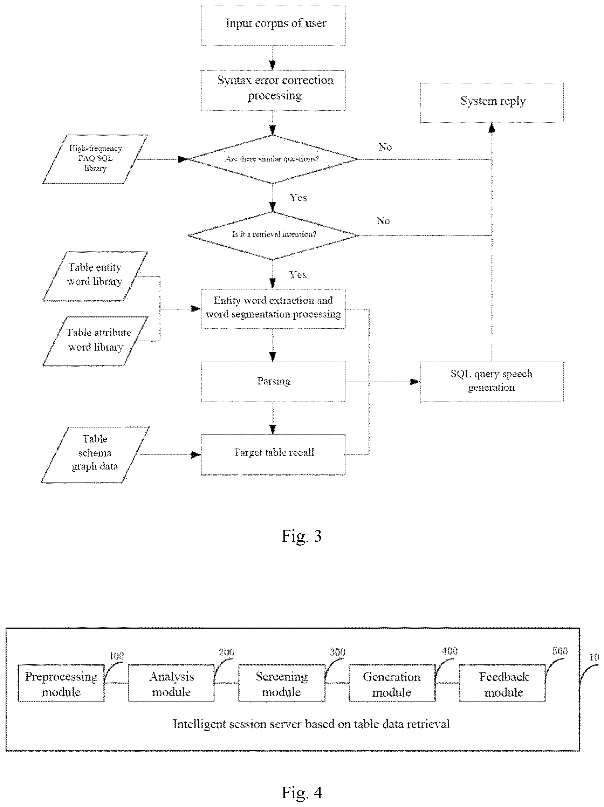

In order to deepen the understanding of the above method embodiments, an overall process implementation including the above main methods is described in the present embodiment, and a schematic flowchart of an overall process implementation according to the present embodiment is shown in Fig. 3.
(1) An input corpus of a user is received.
(2) Syntax error correction processing is performed on the input corpus.
(3) A pre-established high-frequency FAQ SQL library is invoked to search for similar questions of the input corpus after syntax error correction to identify whether there is a question of which the similarity is higher than a threshold in the high-frequency FAQ SQL library. If yes, SQL replies corresponding to similar problems are directly extracted from the high-frequency FAQ SQL library to generate a system reply. If no, step (4) is performed.
(4) Retrieval intention identification is performed on the error-corrected input corpus. If the input corpus does not belong to a retrieval intention, the system reply may be generated according to a knowledge graph. If the input corpus belongs to the retrieval intention, step (5) is performed.
(5) Entity word extraction and word segmentation processing are performed according to a table entity word library and a table attribute word library, and the generated words are taken as entity words as a whole.
   The table entity word library and the table attribute word library are generated for performing data enhancement processing according to a data retrieval table.
(6) Parsing is performed according to the entity words and the input corpus after syntax error correction to obtain a parsing result.
   The parsing result, the entity words and the input corpus after syntax error correction are taken as input features.
(7) A target table corresponding to the entity words is matched according to table schema graph data.
(8) An SQL is generated according to the target table and the input features.

It should be noted that in the present embodiment, only one flow including the above method is introduced, and the execution of other steps in the order of execution may refer to the introduction of the present embodiment. The specific principles and implementations corresponding to each step may refer to the introduction of the above method embodiment. Detailed descriptions thereof are omitted herein.

Next, an intelligent session apparatus based on table data retrieval according to an embodiment of the present application will be described with reference to the accompanying drawings.

Fig. 4 is a schematic block diagram of an intelligent session server based on table data retrieval according to an embodiment of the present application.

As shown in Fig. 4, the intelligent session server 10 based on table data retrieval includes: a preprocessing module 100, an analysis module 200, a screening module 300, a generation module 400, and a feedback module 500.

The preprocessing module 100 is configured to receive an input corpus, and invoke a syntax error correction method to obtain an error-corrected input corpus. The analysis module 200 is configured to query a preset high-frequency question SQL library based on the error-corrected input corpus, return a found SQL result if hitting, invoke an intention classification method based on the error-corrected input corpus and return an unanswerable state if missing, and invoke an entity extraction and parsing method based on the input corpus if hitting a retrieval intention to obtain an entity extraction and parsing result. The screening module 300 is configured to search, based on an entity extraction result, a table entity word table for a table entity query result, invoke a table recall method based on the table entity query result to obtain a target table, and screen corresponding table entity word information. The generation module 400 is configured to perform feature splicing and feature coding based on the entity extraction and parsing result of the input corpus and the table entity word information, and invoke a query language conversion model based on coded features to generate an SQL statement. The feedback module 500 is configured to submit to a database execution engine based on the SQL statement to obtain an execution result, and return the execution result through an interface as a reply of the input corpus.

Optionally, the generation module 400 is further configured to obtain a query target column, an aggregation operation method of the query target column, a filtering condition target column, a comparison logic and a comparison value corresponding to the filtering condition target column, and a classification prediction result of a logic between filtering conditions, and generate the SQL statement in combination with a preset SQL syntax specification and an association relationship between tables.

Optionally, the preprocessing module 100 is configured to: perform word segmentation on the input corpus, and obtain a context-specific word segmentation combination in combination with a window translation method; score the word segmentation combination by using a pre-trained linguistic statistical model, and take a site with the largest deviation from mean in a score as a potential error site; obtain a candidate character set by using preset homophones and table-similar words and preset common confusion dictionaries for a character corresponding to the potential error site; and score a statement in which a candidate character replaces the character corresponding to the error site again to obtain an optimal result as an error correction result.

Optionally, the analysis module 200 is configured to: predict whether the input corpus belongs to a preset retrieval intention by using a pre-trained text classification model; perform entity word extraction according to the input corpus if the input corpus belongs to the preset retrieval intention; and perform a non-retrieval intention prompt and execute an operation of no response from a table data retrieval service if the input corpus does not belong to the preset retrieval intention.

Optionally, the analysis module 200 is further configured to: extract entity words in the input corpus as potential entity words; perform word segmentation and part-of-speech extraction on the input corpus as language segmented words; and take the potential entity words and the language segmented words as the entity words.

Optionally, the analysis module 200 is further configured to: perform representation normalization processing on the input corpus to obtain a normalization statement; and perform time and value extraction on the normalization statement according to a regular expression, invoke a pre-trained NER model to extract a common name of the normalization statement, and take the extracted entity words and corresponding entity word types as the potential entity words.

Optionally, the table entity recall and target table recall method includes: matching a table entity mapping table according to the entity words to obtain a table entity recall result; and querying data of a table relationship graph based on the table entity recall result, and obtaining a query result of the shortest path in combination with a path search algorithm.

Optionally, the language conversion model includes: a model body adopting an ERINE pre-training model framework; a coding layer, using coded results of character features of the input corpus, character features of table listing, matching features of corpus entities and table entities, and parsing features as input respectively; and a reasoning layer, taking a query target column, an aggregation operation method of the query target column, a filtering condition target column, a comparison logic and a comparison value corresponding to the filtering condition target column, and a logic between filtering conditions as prediction targets.

Optionally, a training method of the language conversion model includes: performing joint training by taking the difference between a task prediction result and an actual result of the reasoning layer as a loss value and the sum of minimum loss values as an iteration target.

Optionally, the server further includes: a construction module, configured to determine, prior to searching the table entity word library, a data retrieval table; extract enumeration fields in the data retrieval table, extract field information, and establish a mapping relationship table containing field values, field names and table names; extract entity word records containing field names and table names of enumeration and numerical type fields from the data retrieval table, and add into the mapping relationship table; invoke a fasttext word vector model to perform vectorization processing on the field values; and take the mapping relationship table as the table entity word library.

It should be noted that the foregoing explanation of the embodiment of the intelligent session method based on table data retrieval is also applicable to the intelligent session apparatus based on table data retrieval of this embodiment, and the apparatus will not be described in detail herein.

According to the intelligent session apparatus based on table data retrieval proposed in the embodiment of the present application, an entity word library is constructed for a data retrieval table, prior information of the table is fully extracted, table information is enhanced, and the accuracy of the semantic expression of the table information is improved. After receiving an input corpus, the matching comparison between the input corpus and the data retrieval table is switched to the comparison between entity words of the input corpus and a table entity word library, a scheme for inputting a natural language and a multi-table association query is provided, the statement length of the comparison is shortened, and rapid matching can be achieved. To ensure that an SQL statement accurately corresponds to the natural language, the input corpus, a parsing result, and interaction features between a target table and the entity words are input into a query language conversion model to construct the SQL statement, and the interaction features between the target table and the entity words and syntax information input into the natural language are introduced into a coding layer of the query language conversion model. By taking the target table obtained by matching as an input, a feature network can be significantly reduced, the complexity of the coding layer can be reduced, and multi-field and multi-value scenarios of complex tables can be adapted. By taking field values and interaction features of questions from users as input features for statement analysis and assembly, the accurate correspondence between the corpus content and the table field when only the field values are mentioned in the input corpus can be ensured. By extracting the parsing result of the input corpus for assembling the SQL statement, the accurate correspondence between the SQL statement and the natural language in statement assembly can be ensured. Therefore, the apparatus may adapt to diversified user questions, and achieve the accurate correspondence between the SQL statement and the natural language. Also, the feature network is small, and the coding complexity is low, thereby reducing the implementation difficulty and improving the computing efficiency.

In the descriptions of this specification, descriptions with reference to the terms "one embodiment", "some embodiments", "examples", "specific examples", or "some examples", etc. mean that specific features, structures, materials, or characteristics described in conjunction with the embodiment or example are included in at least one embodiment or example of the present application. In this specification, schematic representations of the above terms do not necessarily refer to the same embodiment or example. Furthermore, the specific features, structures, materials, or characteristics described may be combined in a suitable manner in any one or N embodiments or examples. In addition, without contradicting each other, those skilled in the art may integrate and combine different embodiments or examples and features of different embodiments or examples described in this specification.

In addition, terms "first" and "second" are used for descriptive purposes only and are not to be construed as indicating or implying relative importance or implicitly indicating the number of technical features indicated. Thus, a feature defined as "first" or "second" may explicitly or implicitly include at least one such feature. In the description herein, "N" means at least two, e.g. two, three, etc. unless specifically limited otherwise.

Any process or method description in a flowchart or otherwise described herein may be understood to represent a module, segment or portion of code including one or N executable instructions for implementing custom logic functions or process steps, and the scope of the preferred implementations of the present application includes additional implementations. The functions may be performed in a substantially simultaneous manner, or in a reverse order, out of the order shown or discussed, according to the functionality involved, as would be understood by those skilled in the art to which the embodiments of the present application pertain.

The logic and/or steps represented in the flowchart or otherwise described herein, e.g. as a ordered list of executable instructions for implementing logical functions, may be embodied in any computer-readable medium for use by or in connection with an instruction execution system, apparatus or device (such as a computer-based system, a processor-containing system, or other systems that may obtain instructions from the instruction execution system, apparatus or device and execute the instructions). In this specification, the "computer-readable medium" may be any apparatus that may contain, store, communicate, propagate, or transmit the program for use by or in connection with the instruction execution system, apparatus or device. More specific examples (a non-exhaustive list) of the computer-readable medium include the following: an electrical connection portion (electronic apparatus) having one or N wires, a portable computer disk cartridge (magnetic apparatus), a random access memory (RAM), a read-only memory (ROM), an erasable programmable read-only memory (EPROM) or a flash memory, an optical fiber apparatus, and a portable compact disc read-only memory (CDROM). In addition, the computer-readable medium may even be paper or another suitable medium upon which the program is printed, as the program may be electronically obtained, via, for example, optical scanning of the paper or another medium, then compiled, interpreted, or otherwise processed in a suitable manner, if necessary, and then stored in a computer memory.

It should be understood that portions of the present application may be implemented in hardware, software, firmware, or a combination thereof. In the above implementations, the N steps or methods may be implemented in software or firmware stored in the memory and executed by a suitable instruction execution system. For example, if implemented in hardware as in another implementation, it may be implemented using any one or combination of the following techniques known in the art: a discrete logic circuit having logic gates for implementing logic functions on data signals, an application specific integrated circuit having suitable combinational logic gates, a programmable gate array (PGA), a field programmable gate array (FPGA), etc.

It will be appreciated by those of ordinary skill in the art that all or a portion of the steps carried out by the method of the above embodiments may be performed through related hardware instructed by a program. The program may be stored in a computer-readable storage medium. The program, when executed, includes one of the steps in the method embodiments or a combination thereof.

In addition, respective functional units in various embodiments of the present application may be integrated in one processing module. Each unit may physically exist separately, or two or more units may be integrated in one module. The integrated modules may be implemented in the form of hardware or in the table of software functional modules. The integrated modules, if implemented in the form of software functional modules and sold or used as stand-alone products, may also be stored in a computer-readable storage medium.

The storage medium mentioned above may be a read-only memory, a magnetic or optical disk, etc. While the embodiments of the present application have been shown and described above, it will be understood that the above embodiments are exemplary and are not to be construed as limitations of the present application, and that variations, modifications, substitutions, and alterations to the above embodiments may be made by those of ordinary skill in the art within the scope of the present application.

## Claims

1. An intelligent session method based on table data retrieval, comprising the following steps:
receiving an input corpus, and invoking a syntax error correction method to obtain an error-corrected input corpus;
querying a preset high-frequency question SQL library based on the error-corrected input corpus, returning a found SQL result if hitting, invoking an intention classification method based on the error-corrected input corpus and returning an unanswerable state if missing, and invoking an entity extraction and parsing method based on the input corpus if hitting a retrieval intention to obtain an entity extraction and parsing result;
searching, based on an entity extraction result, a table entity word library for a table entity query result, invoking a table recall method based on the table entity query result to obtain a target table, and screening corresponding table entity word information;
performing feature splicing and feature coding based on the entity extraction and parsing result of the input corpus and the table entity word information, and invoking a query language conversion model based on coded features to generate an SQL statement; and
submitting to a database execution engine based on the SQL statement to obtain an execution result, and returning the execution result through an interface as a reply of the input corpus.

2. The method according to claim 1, wherein the invoking a query language conversion model based on coded features to generate an SQL statement comprises:
obtaining a query target column, an aggregation operation method of the query target column, a filtering condition target column, a comparison logic and a comparison value corresponding to the filtering condition target column, and a classification prediction result of a logic between filtering conditions, and generating the SQL statement in combination with a preset SQL syntax specification and an association relationship between tables.

3. The method according to claim 1, wherein the receiving an input corpus and invoking a syntax error correction method to obtain an error-corrected input corpus comprises:
performing word segmentation on the input corpus, and obtaining a context-specific word segmentation combination in combination with a window translation method;
scoring the word segmentation combination by using a pre-trained linguistic statistical model, and taking a site with the largest deviation from mean in a score as a potential error site;
obtaining a candidate character set by using preset homophones and table-similar words and preset common confusion dictionaries for a character corresponding to the potential error site; and
scoring a statement in which a candidate character replaces the character corresponding to the error site again to obtain an optimal result as an error correction result.

4. The method according to claim 1, wherein the invoking an intention classification method based on the error-corrected input corpus comprises:
predicting whether the input corpus belongs to a preset retrieval intention by using a pre-trained text classification model;
performing entity word extraction according to the input corpus if the input corpus belongs to the preset retrieval intention; and
performing a non-retrieval intention prompt and executing an operation of no response from a table data retrieval service if the input corpus does not belong to the preset retrieval intention.

5. The method according to claim 1, wherein the extracting entity words according to the input corpus comprises:
extracting entity words in the input corpus as potential entity words;
performing word segmentation and part-of-speech extraction on the input corpus as language segmented words; and
taking the potential entity words and the language segmented words as the entity words.

6. The method according to claim 5, wherein the extracting entity words in the input corpus as potential entity words comprises:
performing representation normalization processing on the input corpus to obtain a normalization statement; and
performing time and value extraction on the normalization statement according to a regular expression, invoking a pre-trained NER model to extract a common name of the normalization statement, and taking the extracted entity words and corresponding entity word types as the potential entity words.

7. The method according to claim 5, wherein the table entity recall and target table recall method comprises:
matching a table entity mapping table according to the entity words to obtain a table entity recall result; and
querying data of a table relationship graph based on the table entity recall result, and obtaining a query result of the shortest path in combination with a path search algorithm.

8. The method according to claim 1, wherein the language conversion model comprises:
a model body adopting an ERINE pre-training model framework;
a coding layer, using coded results of character features of the input corpus, character features of table listing, matching features of corpus entities and table entities, and parsing features as input respectively; and
a reasoning layer, taking a query target column, an aggregation operation method of the query target column, a filtering condition target column, a comparison logic and a comparison value corresponding to the filtering condition target column, and a logic between filtering conditions as prediction targets.

9. The method according to claim 8, wherein a training method of the language conversion model comprises:
performing joint training by taking the difference between a task prediction result and an actual result of the reasoning layer as a loss value and the sum of minimum loss values as an iteration target.

10. The method according to claim 7, prior to searching the table entity word library, further comprising:
determining a data retrieval table;
extracting enumeration fields in the data retrieval table, extracting field information, and establishing a mapping relationship table containing field values, field names and table names;
extracting entity word records containing field names and table names of enumeration and numerical type fields from the data retrieval table, and adding into the mapping relationship table;
invoking a fasttext word vector model to perform vectorization processing on the field values; and
taking the mapping relationship table as the table entity word library.

11. An intelligent session server based on table data retrieval, comprising:
a preprocessing module, configured to receive an input corpus, and invoke a syntax error correction method to obtain an error-corrected input corpus;
an analysis module, configured to query a preset high-frequency question SQL library based on the error-corrected input corpus, return a found SQL result if hitting, invoke an intention classification method based on the error-corrected input corpus and return an unanswerable state if missing, and invoke an entity extraction and parsing method based on the input corpus if hitting a retrieval intention to obtain an entity extraction and parsing result;
a screening module, configured to search, based on an entity extraction result, a table entity word table for a table entity query result, invoke a table recall method based on the table entity query result to obtain a target table, and screen corresponding table entity word information;
a generation module, configured to perform feature splicing and feature coding based on the entity extraction and parsing result of the input corpus and the table entity word information, and invoke a query language conversion model based on coded features to generate an SQL statement; and
a feedback module, configured to submit to a database execution engine based on the SQL statement to obtain an execution result, and return the execution result through an interface as a reply of the input corpus.

12. The server according to claim 11, wherein the generation module is further configured to obtain a query target column, an aggregation operation method of the query target column, a filtering condition target column, a comparison logic and a comparison value corresponding to the filtering condition target column, and a classification prediction result of a logic between filtering conditions, and generate the SQL statement in combination with a preset SQL syntax specification and an association relationship between tables.

13. The server according to claim 11, wherein the preprocessing module is configured to:
perform word segmentation on the input corpus, and obtain a context-specific word segmentation combination in combination with a window translation method;
score the word segmentation combination by using a pre-trained linguistic statistical model, and take a site with the largest deviation from mean in a score as a potential error site;
obtain a candidate character set by using preset homophones and table-similar words and preset common confusion dictionaries for a character corresponding to the potential error site; and
score a statement in which a candidate character replaces the character corresponding to the error site again to obtain an optimal result as an error correction result.

14. The server according to claim 11, wherein the analysis module is configured to:
predict whether the input corpus belongs to a preset retrieval intention by using a pre-trained text classification model;
perform entity word extraction according to the input corpus if the input corpus belongs to the preset retrieval intention; and
perform a non-retrieval intention prompt and executing an operation of no response from a table data retrieval service if the input corpus does not belong to the preset retrieval intention.

15. The server according to claim 11, wherein the analysis module is further configured to:
extract entity words in the input corpus as potential entity words;
perform word segmentation and part-of-speech extraction on the input corpus as language segmented words; and
take the potential entity words and the language segmented words as the entity words.

16. The server according to claim 15, wherein the analysis module is further configured to:
perform representation normalization processing on the input corpus to obtain a normalization statement; and
perform time and value extraction on the normalization statement according to a regular expression, invoke a pre-trained NER model to extract a common name of the normalization statement, and take the extracted entity words and corresponding entity word types as the potential entity words.

17. The server according to claim 15, wherein the table entity recall and target table recall method comprises:
matching a table entity mapping table according to the entity words to obtain a table entity recall result; and
querying data of a table relationship graph based on the table entity recall result, and obtaining a query result of the shortest path in combination with a path search algorithm.

18. The server according to claim 11, wherein the language conversion model comprises:
a model body adopting an ERINE pre-training model framework;
a coding layer, using coded results of character features of the input corpus, character features of table listing, matching features of corpus entities and table entities, and parsing features as input respectively; and
a reasoning layer, taking a query target column, an aggregation operation method of the query target column, a filtering condition target column, a comparison logic and a comparison value corresponding to the filtering condition target column, and a logic between filtering conditions as prediction targets.

19. The server according to claim 18, wherein a training method of the language conversion model comprises:
performing joint training by taking the difference between a task prediction result and an actual result of the reasoning layer as a loss value and the sum of minimum loss values as an iteration target.

20. The server according to claim 11, further comprising:
a construction module, configured to determine, prior to searching the table entity word library, a data retrieval table; extract enumeration fields in the data retrieval table, extract field information, and establish a mapping relationship table containing field values, field names and table names; extract entity word records containing field names and table names of enumeration and numerical type fields from the data retrieval table, and add into the mapping relationship table; invoke a fasttext word vector model to perform vectorization processing on the field values; and take the mapping relationship table as the table entity word library.
